# EUROPÄISCHE PATENTSCHRIFT

(11) **EP 3 590 181 B1**
(45) Veröffentlichungstag und Bekanntmachung des Hinweises auf die Patenterteilung: **29.09.2021**
(21) Anmeldenummer: 18718092.2
(22) Anmeldetag: 18.02.2018
(51) Int. Cl.: H02K 15/12, H05B 6/02, H05B 6/10, H05B 6/06

(54) **VORRICHTUNG ZUR TRÄUFELIMPRÄGNIERUNG EINES STATORS ODER ANKERS EINER ELEKTROMASCHINE**
DEVICE FOR THE TRICKLE IMPREGNATION OF A STATOR OR ARMATURE OF AN ELECTRIC MACHINE
DISPOSITIF D'IMPRÉGNATION GOUTTE À GOUTTE D'UN STATOR OU D'UNE ARMATURE D'UNE MACHINE ÉLECTRIQUE

(30) Priorität: 28.02.2017 DE 102017001939
(43) Veröffentlichungstag der Anmeldung: 08.01.2020
(73) Patentinhaber: Gehring Technologies GmbH + Co. KG, 73760 Ostfildern (DE)
(72) Erfinder: BERTHOLD, Jens, 06467 Hoym (DE); SCHNEIDER, Stefan, 06268 Langeneichstädt (DE); RASP, Richard A., 61250 Usingen (DE)
(74) Vertreter: DREISS Patentanwälte PartG mbB
(86) Internationale Anmeldenummer: PCT/DE2018/000034
(87) Internationale Veröffentlichungsnummer: WO 2018/157877

(56) Entgegenhaltungen:
- EP-A1- 2 110 932
- DE-A1- 1 538 918
- DE-T5-112014 002 790
- JP-A- 2010 262 828
- JP-A- 2012 005 283
- US-A- 5 685 910
- US-B1- 6 302 961

## Beschreibung

Die Erfindung betrifft eine Imprägniervorrichtung zur Träufelimprägnierung eines Stators oder Ankers einer Elektromaschine mit einem unter Temperaturerhöhung aushärtenden Kunstharz, aufweisend eine in Bezug zur Horizontalen vertikal kippbare Haltevorrichtung, an welcher ein Antriebsmotor als Rotationsantrieb für den Stator oder Anker befestigt ist, eine mit dem Antriebsmotor antriebswirksam verbundene Antriebswelle, eine mit der Antriebswelle drehfest verbundene Einspannvorrichtung, mittels welcher der Stator oder Anker mit der Antriebswelle lösbar verbindbar ist, eine Träufelvorrichtung, mittels der ein Kunstharz auf zumindest ein axiales Ende der Wicklungen des Stators oder Ankers leitbar ist, und eine Heizvorrichtung, mittels welcher die Wicklungen des Stators oder Ankers auf eine Träufeltemperatur sowie auf eine im Vergleich dazu höhere Aushärtetemperatur aufheizbar sind. Außerdem betrifft die Erfindung eine Fertigungsanlage zur Träufelimprägnierung eines Stators oder Ankers, in der diese Imprägniervorrichtung integriert ist.

Es ist allgemein bekannt, dass bei der Herstellung einer Elektromaschine, sei es nun ein Elektromotor oder ein Generator, eine Verfestigung der Wicklungen des Stators und Ankers vorgenommen werden muss. Dies geschieht heute üblicherweise mittels eines sogenannten Träufelverfahrens und einer diesbezüglichen Imprägniervorrichtung. Der Stator oder der Anker wird dazu aufgeheizt und hinsichtlich seiner Längsachse üblicherweise schräg in der Imprägniervorrichtung eingespannt sowie um diese Längsachse gedreht. Der Stator oder Anker kann jedoch auch horizontal ausgerichtet sein. Anschließend wird vorzugsweise auf das höher angeordnete axiale Ende des Stators oder Ankers, etwa auf dessen Wicklungskopf, ein bei Raumtemperatur zunächst flüssiges Kunstharz aufgeträufelt. Das Kunstharz kann aus einer oder mehreren Komponenten bestehen, beispielsweise aus einem Basis-Kunstharz und einem Härter.

Der Volumenstrom, mit dem das noch flüssige Kunstharz auf den Stator oder Anker aufgebracht wird, ist abgestimmt auf die jeweilige Aufnahmefähigkeit desselben. Nach dem Aufträufeln gelangt das Kunstharz in die Zwischenräume zwischen den Wicklungsdrähten sowie den Blechpaketen und füllt diese Zwischenräume vollständig aus. Bei einem anschließenden Erwärmen des Stators oder Ankers auf eine Aushärtetemperatur des Kunstharzes verfestigt sich dieses und wird zu einem Duroplast, welcher nach diesem Aushärten durch eine neuerliche Erwärmung nicht mehr verformbar ist. Hierdurch sind die mit dem Kunstharz in Kontakt gekommenen Bauteile des Stators oder Ankers fest miteinander verbunden. Das Duroplast erfüllt alle mechanischen und elektrischen Anforderungen, die an eine stillstehende oder rotierende Elektromaschine gestellt werden.

Um ein optimales Eindringen des zunächst flüssigen Kunstharzes in den Stator oder Anker zu gewährleisten, wird zumindest der Stator oder Anker vor dem Beginn des Träufelvorgangs auf eine sogenannte Träufeltemperatur erhitzt sowie während des Träufelvorgangs auf dieser Temperatur gehalten. Die Träufeltemperatur kann abhängig von dem verwendeten Kunstharz beispielsweise zwischen 70°C und 90°C betragen. Nachdem eine vorbestimmte Menge des zunächst noch flüssigen Kunstharzes in den Stator oder Anker eingebracht wurde, wird dieser auf eine Aushärtetemperatur erhitzt, welche ebenfalls kunstharzabhängig beispielsweise zwischen 120°C und 160°C beträgt. Diese Aushärtetemperatur wird dann über einen vorbestimmten Zeitraum eingehalten, um so ein vollständiges Aushärten des Kunstharzes zu ermöglichen. Abschließend wird der Stator oder Anker auf Raumtemperatur abgekühlt und für weitere Herstellvorgänge zur Erzeugung der Elektromaschine bereitgestellt.

Die Erwärmung des Stators oder Ankers auf die Träufeltemperatur und die Aushärtetemperatur kann in einem dafür geeigneten Ofen erfolgen. Aus der DE 1 212 204 A und der DE 19 19 642 A ist es aber bereits bekannt, die Erwärmung des Stators oder Ankers mittels eines elektrischen Heizstromes zu erreichen, der durch die Wicklungen des Stators oder Ankers geleitet wird. Da ein einfaches Hindurchleiten eines Heizstromes durch die Wicklungen zu große Abweichungen der erreichbaren Ist-Temperaturen von den angestrebten Soll-Temperaturen entstehen lässt, wurde vorgeschlagen, das Erreichen und Aufrechterhalten der gewünschten Temperaturen durch eine Regelung des Heizstromes zu gewährleisten. Hierbei wurde die Erkenntnis genutzt, dass in einer Wicklung der Ohm'sche Widerstand mit ansteigender Temperatur zunimmt, so dass über den Ohm'schen Widerstand auf die Temperatur der Wicklung geschlossen werden kann. In der DE 1 212 204 A wurde daher vorgeschlagen, dass dann, wenn der für das Vorliegen der Träufeltemperatur oder Aushärtetemperatur erforderliche elektrische Widerstandswert der Wicklung erreicht ist, der durch die Wicklung des Stators oder Ankers geleitete Heizstrom abgeschaltet wird. Der Heizstrom wird erst dann wieder eingeschaltet, wenn ein vorbestimmt geringerer Widerstandswert der Wicklung gemessen wird, welches gleichbedeutend mit dem Unterschreiten einer unteren Grenztemperatur ist.

Die Druckschrift US 5 685 910 A beschreibt eine Imprägniervorrichtung zur Träufelimprägnierung mit Merkmalen des Anspruchs 1. Die Druckschriften JP 2012 005283 A und DE 11 2014 002790 T5 beschreiben elektromagnetische Induktoren als Heizvorrichtung für einen Stator.

Nachteilig bei diesen bekannten Verfahren und den dazu benutzten Vorrichtungen zum Imprägnieren eines Stators oder Ankers einer Elektromaschine ist jedoch, dass die Temperaturregelung mittels eines durch die Wicklung geleiteten Heizstromes erfolgt, der technisch aufwendig in den sich drehenden Stator oder Anker einzuspeisen ist. Außerdem weisen die in den beiden Druckschriften vorgeschlagenen Verfahren und Vorrichtungen den Mangel auf, dass die Regelung des Heizstromes allein auf die Temperatur der von dem Heizstrom durchflossenen Wicklung abgestellt ist. Dies ist zumindest in denjenigen Zeiträumen unvorteilhaft, in denen die die Wicklungen umgebenden anderen Bauteile noch nicht die Temperatur der Wicklungen angenommen haben. Da das Kunstharz aber nicht nur zwischen benachbarte Drähte beziehungsweise Drahtabschnitte der Wicklungen sondern auch mit anderen Bauteilen des Stators beziehungsweise Ankers in Kontakt gelangt, ergibt sich für das dort vorhandene Kunstharz eine nicht genau bekannte Temperatur. Daher ist zumindest die Aufheizphase bis zum Erreichen der Träufeltemperatur aufgrund von Erfahrungswerten so zu verlängern, bis davon ausgegangen werden kann, dass die durch die elektrische Widerstandsmessung ermittelte Wicklungstemperatur auch bei allen anderen Bauteilen des Stators oder Ankers vorliegt. Erst dann kann mit dem Einträufeln des Kunstharzes in den Stator oder Anker mit der gewünschten Prozesssicherheit begonnen werden. Da diese Unsicherheit hinsichtlich der Temperaturen der Bauteile des Stators oder Ankers und des Kunstharzes auch zu Beginn des Aushärtevorgangs vorliegt, muss dieser ebenfalls nachteilig um einen Sicherheitszeitraum verlängert werden. Letztlich wird es als ungünstig beurteilt, dass die Erwärmung des Kunstharzes nur mittelbar durch den Wärmetransport zwischen den Wicklungen und demselben stattfindet. Dies führt dazu, dass das Erreichen der Träufeltemperatur und der Aushärtetemperatur vergleichsweise lange dauert.

Die geschilderten Zeiträume für die Imprägnierung eines Stators oder Ankers bedeuten im Ergebnis eine kostenintensive Verlängerung der Fertigungsdauer sowie eine Vergrößerung der Energiekosten zum Aufheizen sowie Konstanthalten der Träufel- und Aushärtungstemperatur.

Der Erfindung liegt daher die Aufgabe zugrunde, eine Vorrichtung vorzustellen, mit der das Imprägnieren eines Stators oder Ankers einer Elektromaschine mit einem unter Wärmeeinwirkung aushärtenden Kunstharzes schneller, energiesparender und kostengünstiger als bisher erfolgen kann. Außerdem soll eine vollautomatisch arbeitende Fertigungsanlage vorgestellt werden, in der die genannte Vorrichtung integriert ist.

Die Lösung dieser Aufgabe wird mit einer Imprägniervorrichtung erreicht, welche die Merkmale des Anspruchs 1 aufweist. Im unabhängigen Anspruch 12 ist eine autonom arbeitende Fertigungsanlage angegeben, in der eine die Merkmale der Erfindung aufweisende Imprägniervorrichtung zum Imprägnieren eines Stators oder Ankers einer Elektromaschine prozesstechnisch optimal integriert ist. Vorteilhafte Weiterbildungen der Imprägniervorrichtung und der Fertigungsanlage sind in den jeweils zugeordneten abhängigen Ansprüchen definiert.

Die Erfindung betrifft demnach eine Imprägniervorrichtung zur Träufelimprägnierung eines Stators oder Ankers einer Elektromaschine mit einem unter Temperaturerhöhung aushärtenden Kunstharz, aufweisend eine in Bezug zur Horizontalen vertikal kippbare Haltevorrichtung, an welcher ein Antriebsmotor als Rotationsantrieb für den Stator oder Anker befestigt ist, eine mit dem Antriebsmotor antriebswirksam verbundene Antriebswelle, eine mit der Antriebswelle drehfest verbundene Einspannvorrichtung, mittels welcher der Stator oder Anker mit der Antriebswelle lösbar verbindbar ist, eine Träufelvorrichtung, mittels der ein Kunstharz auf ein axiales Ende der Wicklungen des Stators oder Ankers leitbar ist, und eine Heizvorrichtung, mittels welcher die Wicklungen des Stators oder Ankers auf eine Träufeltemperatur sowie auf eine im Vergleich dazu höhere Aushärtetemperatur aufheizbar sind. Gemäß der Erfindung weist die Heizvorrichtung einen elektromagnetischen Induktor auf, welcher koaxial oder achsparallel zum Stator oder Anker angeordnet ist.

Die Erfindung nutzt die Erkenntnis, dass sich ein Stator oder Anker für eine Elektromaschine sehr vorteilhaft mittels einer induktiven Erwärmung auf die Träufeltemperatur und die Aushärtungstemperatur bringen sowie auf diesen Temperaturen halten lässt. Von besonderer Bedeutung ist dabei, dass mit nur einem Induktor in allen elektrisch leitfähigen Bestandteilen eines solchen Stators oder Ankers gleichzeitig Wirbelströme erzeugt werden, welche diese Bauteile gleichzeitig erwärmen. Hierdurch werden die Aufheizdauer sowie die notwendige elektrische Energie im Vergleich zu den bekannten Imprägniervorrichtungen deutlich reduziert. Im Ergebnis werden dadurch die Herstellkosten für die Imprägnierung reduziert.

Bei einer Imprägniervorrichtung mit den Merkmalen der Erfindung erfolgt die Erwärmung aller elektrisch leitenden Bauteile des Stators oder Ankers demnach mittels elektrischer Wirbelströme, welche durch ein hochfrequentes oder mittelfrequentes magnetisches Wechselfeld eines elektromagnetischen Induktors erzeugt werden, der den Stator oder Anker radial außen hohlzylindrisch oder wendelförmig koaxial umgreift. Der elektromagnetische Induktor kann aber auch in einem zentrischen, koaxialen Hohlraum des Stators angeordnet sein. Die elektrischen Wirbelströme erwärmen dabei gleichzeitig alle elektrisch leitenden Bauteile des Stators oder Ankers, nämlich die eisernen Blechpaketrahmen, die Bleche des Blechpakets, die Wicklungsdrähte und über Wärmeleitung auch das eingeträufelte Kunstharz. Auch andere Bauteile oder Gegenstände (zum Beispiel Isolationsmaterial), die in Kontakt mit den elektrisch leitenden Bauteilen des Stators oder Ankers sind, werden dadurch mittelbar auf die angestrebte Träufeltemperatur oder Aushärtetemperatur gebracht.

Die beanspruchte Vorrichtung kann so ausgebildet sein, dass der Induktor nur über einen Abschnitt der axialen Länge oder über die gesamte axiale Länge des Stators oder Ankers koaxial oder achsparallel zu diesem angeordnet ist. Außerdem kann hierbei vorgesehen sein, dass der Induktor radial über dem Stator oder Anker angeordnet ist, oder dass der Induktor wie erwähnt radial innerhalb des Stators angeordnet ist.

Sofern der Induktor gleich lang oder ähnlich lang ausgebildet ist wie der Stator oder Anker, kann die Leistungsregelung des Induktors und damit die Intensität der in dem Stator oder Anker induzierten Wirbelströme durch ein getaktetes Ein- und Ausschalten des Induktors geregelt werden. Wenn der Induktor axial kürzer ist als der Stator oder Anker, dann kann der Induktor entlang der Längserstreckung des Stators oder Ankers koaxial hin- und herbewegt werden. Dadurch werden immer nur bestimmte Axialabschnitte des Stators oder Ankers von dem magnetischen Wechselfeld des Induktors beaufschlagt, während die nicht beaufschlagten Bereiche des Stators oder Ankers lediglich deren Wärme zu Vergleichmäßigung der Gesamterwärmung an benachbarte Bauteile abgeben, und zwar sowohl axial als auch radial. Auch bei dieser Variante kann der Induktor hinsichtlich seiner elektromagnetischen Wirksamkeit zusätzlich getaktet aktiviert und deaktiviert werden.

Die Länge der Zeiträume, in denen der Induktor eingeschaltet oder ausgeschaltet ist, richtet sich im Wesentlichen nach der Leistungsfähigkeit des Induktors, der elektrischen Leitfähigkeit der Bauteile des Stators oder Ankers sowie deren Wärmekapazität und Wärmeleitfähigkeit. Bei der Regelung des Induktors wird so vorgegangen, dass die Erwärmung der Bauteile des Stators oder Ankers sowie das dort enthaltene Kunstharz energiesparend und vergleichsweise schnell durchgeführt wird.

Gemäß einer vorteilhaften Weiterbildung der Imprägniervorrichtung weist diese ein metallisches Gestell auf, eine an dem Gestell mittels eines ersten Schwenklagers um eine horizontale Schwenkachse kippbar angeordnete Haltevorrichtung, eine Schwenkaktor zur Verschwenkung der Haltevorrichtung an dem ersten Schwenklager in Bezug zum Gestell, einen an der Haltevorrichtung befestigten Antriebsmotor, eine mit dem Antriebsmotor antriebswirksam verbundene Antriebswelle, und eine mit der Antriebswelle drehfest verbundene Einspannvorrichtung, mittels welcher der Stator oder Anker mit der Antriebswelle lösbar verbindbar ist, wobei zumindest ein Bauteil dieser Einspannvorrichtung radial innen an dem Stator oder radial außen an dem Anker angreift, und einen elektromagnetischen Induktor, welcher koaxial oder achsparallel zu dem den Stator oder Anker sowie zu der Einspannvorrichtung angeordnet ist. Hierdurch ist eine kompakte Imprägniervorrichtung geschaffen, die sich in eine autonom arbeitende Fertigungsanlage integrieren lässt.

Der einstellbare Neigungswinkel der vertikal kippbaren Haltevorrichtung beträgt beispielsweise 0° bis 20° zur Waagerechten, einschließlich der Bereichsgrenzen. Hierdurch kann das Kunstharz der Schwerkraft folgend leicht in das Innere des Stators oder Ankers eindringen.

Zur Kopplung eines Stators mit der genannten Antriebswelle kann vorgesehen sein, dass die mit der Antriebswelle drehfest verbundene Einspannvorrichtung zumindest einen Spannstab aufweist, welcher radial innen den Stator axial durchdringt, und dass der Spannstab direkt oder mittelbar mit dem Stator verbunden ist.

Um eine besonders stabile Verbindung zu erreichen, kann vorgesehen sein, dass der Spannstab axial endseitig mit wenigstens zwei Spannbacken oder zumindest zwei radial segmentierte Einspannscheiben verbunden ist, dass diese Spannbacken oder Einspannscheiben an jeweils einem axialen Ende des Rahmens des Stators radial innen anliegend angeordnet sind, und dass mittels des Spannstabs die beiden Spannbacken oder Einspannscheiben gegen den Stator verspannbar sind, so dass dieser an dem Spannstab fixiert ist.

Mittels geeigneter Halterungen an den Spannbacken oder an den beiden segmentierten Einspannscheiben und an den axialen Enden des Spannstabes und/oder mittels diesbezüglicher Schaubmutterverbindungen kann der Spannstab die Einspannscheiben oder Spannbacken gegeneinander verspannen und dadurch den Stator am Spannstab fixieren. Hierdurch ist der Stator antriebswirksam sowie mechanisch stabil an der Antriebswelle befestigt. Dabei sind die Längsachsen der Antriebswelle sowie des Stators koaxial zueinander ausgerichtet. Um die mit dem Antriebsmotor verbundene Antriebswelle mechanisch von dem Gewicht des Stators zu entlasten, kann der Spannstab antriebswellenfern in einem Stützlager gelagert sein. Es können auch mehrere Spannstäbe genutzt werden, sofern das Gewicht des Stators dies ratsam erscheinen lässt. Zur Halterung eines Ankers an der Antriebswelle werden beispielsweise Spannbacken einer anderen Einspannvorrichtung verwendet, die an dem antriebsmotornahen Ende der Welle des Ankers angreifen.

Erfindungsgemäß ist esvorgesehen, dass der Induktor mit einer als Frequenzumrichter arbeitenden Spannungsquelle elektrisch verbunden ist, und dass diese Spannungsquelle ebenso wie der Induktor an der kippbaren Haltevorrichtung angeordnet ist. Hierdurch ist die Energieversorgung des Induktors vereinfacht, da sich sowohl der Induktor als auch dessen Spannungsquelle im gleichen Koordinatensystem befinden, beziehungsweise beide Geräte bei einem Verkippen der Haltevorrichtung ebenfalls synchron mitbewegt werden. Es können daher kostengünstigere starre elektrische Leitungen zwischen der Spannungsquelle und dem Induktor genutzt werden.

Der Induktor ist mit dem Stellglied eines Aktuators verbunden, mittels dem der Induktor koaxial oder achsparallel zur Längsachse des Stators oder Ankers bewegbar an der Haltevorrichtung angeordnet ist. Erfindungsgemäß ist esvorgesehen, dass sowohl der Induktor als auch seine Spannungsquelle mit dem Stellglied eines Aktuators verbunden sind, mittels dem der Induktor koaxial oder achsparallel und die Spannungsquelle parallel zur Längsachse des Stators oder Ankers bewegbar an der Haltevorrichtung angeordnet sind.

Der Aktuator kann als eine elektrische Stelleinrichtung oder als eine druckmittelbetriebene, in beide Axialrichtungen wirksame Kolben-Zylinder-Anordnung ausgebildet sein. Als Antriebsfluid kann Druckluft oder eine Hydraulikflüssigkeit verwendet werden. Bei einer Bewegung sowohl des Induktors als auch dessen Spannungsquelle mit Hilfe des Aktuators kann eine wie oben geschilderte flexible elektrische Verbindung vermieden werden, denn die beiden benannten Vorrichtungen befinden sich dann im gleichen Koordinatensystem, welches mittels der Haltevorrichtung kippbar ist, und in dem eine gemeinsame Axialbewegung durchführbar ist.

Gemäß einer anderen Weiterbildung der Vorrichtung zur Träufelimprägnierung kann mit Vorteil vorgesehen sein, dass die Träufelvorrichtung einen Behälter für Kunstharz, einen Behälter für Härter, einen Mischbehälter zum Mischen von Kunstharz und Härter, Absperrventile in Leitungen zwischen diesen Behältern, sowie eine Pumpe aufweist. Zudem ist die Pumpe mit wenigstens einer Träufeldüse über eine Zuleitung verbunden, mittels der das Kunstharz-Härter-Gemisch auf die Wicklungen des Stators oder Ankers aufträufelbar ist. Die Pumpe ist bevorzugt als Schlauchpumpe ausgebildet, und es werden vorzugsweise vier Träufeldüsen genutzt, wovon jeweils zwei Träufeldüsen auf die radial äußere Seite und zwei weitere Träufeldüsen auf die radial innere Seite des Wicklungskopfes des Stators oder Ankers gerichtet sind.

Außerdem weist die Vorrichtung zur Träufelimprägnierung mit den Merkmalen der Erfindung vorzugsweise einen Temperatursensor auf, mittels dem die Außentemperatur des Stators oder Ankers berührungslos messbar ist. Die berührungslose Temperaturmessung ist wegen des Drehens des Stators oder Ankers während des Träufelvorgangs und des Aushärtevorgangs von Vorteil, denn dadurch brauchen keine ortsfesten Temperatursensoren an dem Stator oder Anker befestigt und deren Signale aus dem drehenden System herausgeführt werden.

Um eine vollautomatische Steuerung und Regelung des Vorgangs einer Träufelimprägnierung einschließlich der Aushärtephase durchführen zu können, kann ein Steuerungsgerät vorhanden sein, welches über eine Sensorleitung mit dem Temperatursensor sowie über Steuerungsleitungen mit dem Antriebsmotor, der Spannungsquelle für den Induktor, dem Aktuator für die Erzeugung der Axialbewegung des Induktors und gegebenenfalls auch der Spannungsquelle, der Pumpe zur Förderung des Kunstharz-Härter-Gemisches sowie den Absperrventilen zwischen den Behältern für Kunstharz und Härter sowie dem Mischbehälter verbunden ist. Zusätzlich kann das Steuerungsgerät mit dem Schwenkaktor für die erwähnte kippbare Haltevorrichtung beziehungsweise mit dessen Steuerungsventilen über weitere Steuerungsleitungen verbunden sein.

Der berührungslos arbeitende Temperatursensor ist demnach mit einem Steuerungsgerät verbunden, in dem die Temperaturmesswerte weiterverarbeitet werden. In Abhängigkeit davon, ob die an der Außenseite des Stators oder Ankers gemessene Ist-Temperatur eine vorher festgelegte Soll-Temperatur unterschreitet, erreicht oder überschreitet, schaltet das Steuerungsgerät den Induktor ein oder aus. Die Aktivierung und Abschaltung des Induktors kann zusätzlich oder abweichend davon auch zeitgesteuert erfolgen. Nach dem Ausschalten des Induktors wird von dem Stator oder Anker Wärme sowohl nach außen abgestrahlt als auch nach innen abgegeben. Dabei erwärmt sich das Innere des Stators oder Ankers und damit auch alle dort angeordneten isolierenden Bauteile sowie das eingeträufelte Kunstharz oder Kunstharz-Härter-Gemisch. Der Vorgang des temperatur- und/oder zeitgesteuerten Einschaltens und Ausschaltendes des Induktors mit der dazwischen jeweils einzuhaltenden Wartephase wird so lange wiederholt, bis der komplette Stator oder Anker die angestrebte Träufeltemperatur oder Aushärtetemperatur erreicht hat. Der geschilderte Vorgang wird vorzugsweise auch dazu genutzt, um die einmal erreichte Träufeltemperatur oder Aushärtetemperatur, beziehungsweise einen Träufeltemperaturbereich oder Aushärtetemperaturbereich über einen bestimmten Zeitraum einzuhalten.

Die Temperatur des Stators oder Ankers beträgt in einem bevorzugten Träufeltemperaturbereich 80°C bis 130°C, sowie in einem Aushärtetemperaturbereich 140°C bis 170°C, einschließlich der jeweiligen Bereichsgrenzen.

Während des Träufelvorgangs und während des Aushärtevorgangs wird der Stator oder Anker mit einer Drehzahl von zum Beispiel 5 bis 40 Umdrehungen pro Minute um seine Längsachse gedreht, um eine gleichmäßige Verteilung des Kunstharzes oder Kunstharz-Härter-Gemisches zu erreichen. Auch diese Drehzahlangaben verstehen sich einschließlich der Bereichsgrenzen.

Um ein gleichmäßiges Erwärmen sowie das Aufrechterhalten einer vorbestimmten Träufeltemperatur oder Aushärtetemperatur zu gewährleisten, kann vorgesehen sein, dass die Geschwindigkeitssteuerung des Aktuators zur Axialverschiebung des Induktors derartig ist, dass über einen vorgegebenen Zeitraum hinweg die durchschnittliche Verweildauer eines elektromagnetisch aktiven Induktors in allen Bereichen des Stators oder Ankers in etwa gleich lang ist.

Die Erfindung betrifft außerdem eine Fertigungsanlage zur Träufelimprägnierung eines Stators oder Ankers einer Elektromaschine mit einem unter Temperaturerhöhung aushärtenden Kunstharz. Diese weist gemäß der Erfindung folgendes auf:
- ein Eingangsmodul zur Lagerung nicht imprägnierter Statoren oder nicht imprägnierter Anker,
- ein Imprägniermodul mit einer einen elektromagnetischen Induktor aufweisenden Imprägniervorrichtung zur Träufelimprägnierung von Statoren oder Anker, welches die Merkmale von zumindest einem der Ansprüche 1 bis 14 aufweist,
- ein Abkühlmodul zur abkühlenden Lagerung imprägnierter Statoren oder Anker,
- ein Ausgangsmodul zur Lagerung abgekühlter und imprägnierter Statoren oder Anker, und
- einen ersten Handhabungsautomaten für den Transport des jeweiligen Stators oder Ankers zwischen dem Eingangsmodul, dem Imprägniermodul, dem Abkühlmodul und dem Ausgangsmodul,
- wobei der erste Handhabungsautomat derartig ausgebildet ist,
dass dieser den jeweiligen Stator oder Anker festhalten, in Bezug zur Horizontalen kippen, um dessen Längsachse drehen, koaxial zu einem hohlzylindrischen oder spulenförmigen Induktor anordnen, sowie in Bezug zu dem ortsfesten oder axial beweglichen Induktor axial bewegen kann.

Bei dieser Fertigungsanlage kann zusätzlich ein Aushärtemodul vorhanden sein, in welches noch nicht oder nur anfänglich ausgehärtete Statoren oder Anker zu einem abschließenden, vollständigen Aushärten angeordnet werden. Der erste Handhabungsautomat ist in diesem Fall derartig ausgebildet, dass dieser auch das Aushärtemodul mit Statoren und/oder Anker befüllen und von diesen entleeren kann.

Hinsichtlich des Aushärtemoduls ist zur Steigerung der Taktfrequenz, mit der die Fertigungsanlage arbeiten kann, bevorzugt vorgesehen, dass diese wenigstens einen eigenen Induktor aufweist, mittels dem in dem Aushärtemodul abgestellte Statoren oder Anker zu einem vollständigen Aushärten beheizt werden können.

Zudem kann vorgesehen sein, dass das Aushärtemodul für jeden dort abzustellenden Stator oder Anker einen separaten Drehabtrieb aufweist, mittels dem der jeweilige Stator oder Anker zumindest zu Beginn des Aushärtens um dessen Längsachse gedreht werden kann.

Letztlich kann bei dieser Fertigungsanlage ein Lagermodul vorhanden sein, in dem Kunstharz-Behälter und Härter-Behälter lagerbar sind. Dieses Lagermodul ist von dem ersten oder von einem zweiten Handhabungsautomaten befüllbar sowie entleerbar.

Die genannten Module können als Schränke mit Ein- und Ausladeöffnungen ausgebildet sein. Sie können aber auch nur vor unbefugtem Zutritt geschützte Fertigungsflächen mit den dort jeweils angeordneten Geräten und/oder Lagerregalen sein.

Zum besseren Verständnis der Erfindung ist eine Zeichnung beigefügt, in der Ausführungsbeispiele dargestellt sind. In der Zeichnung zeigt
Fig. 1 eine schematische Darstellung einer Imprägniervorrichtung mit den Merkmalen der Erfindung, in der ein Stator in einem schematischen Längsschnitt abgebildet ist, der von einem elektromagnetischen Induktor koaxial umgeben ist,
Fig. 2 eine Seitenansicht auf die wesentlichen Bestanteile der Imprägniervorrichtung gemäß Fig. 1 in einer auskonstruierten Darstellung,
Fig. 3 einen schematischen Querschnitt durch einen Stator, in dessen zylindrischen Hohlraum ein elektromagnetischer Induktor koaxial angeordnet ist, und
Fig. 4 eine perspektivische Draufsicht auf eine Fertigungsanlage zur Träufelimprägnierung, in der eine erfindungsgemäße Imprägniervorrichtung integriert ist.

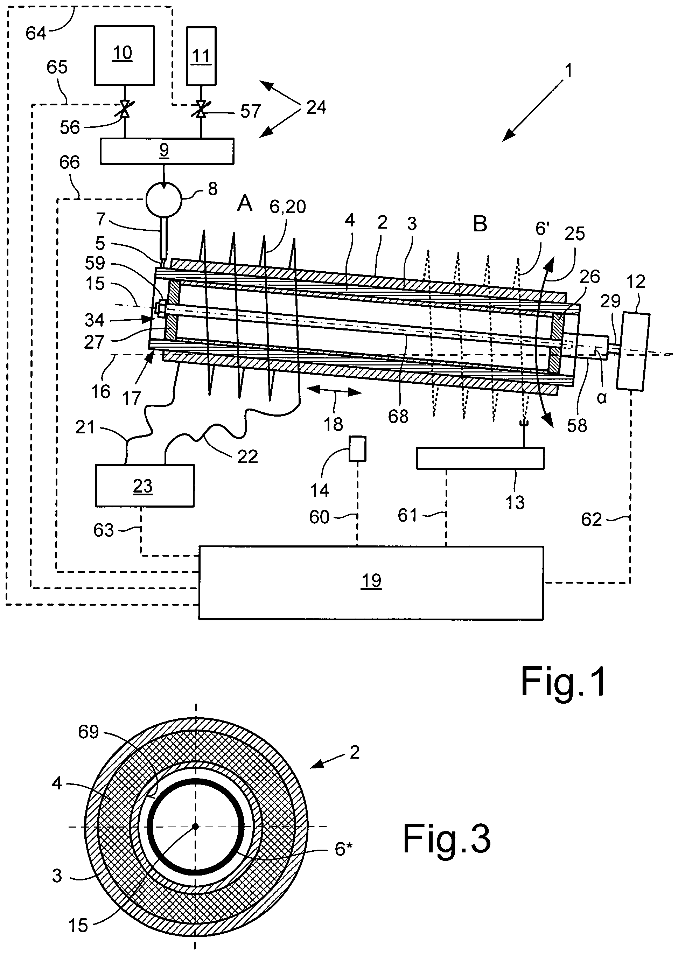

Demnach zeigt Fig. 1 insgesamt eine Imprägniervorrichtung 1 für einen in einem schematischen Längsschnitt dargestellten hohlzylindrischen Stator 2. Ein in der Imprägniervorrichtung 1 behandelter Stator 2 ist nach seiner endgültigen Fertigstellung zum Einbau in eine Elektromaschine bestimmt. Der Stator 2 weist beispielhaft einen konventionellen Aufbau mit ringförmig angeordneten Statorsegmenten auf, wobei jedes dieser Statorsegmente einen Rahmen 3 aufweist, an dem hintereinander angeordnete Bleche befestigt sind. Zwischen jeweils benachbarten Statorsegmenten sind aus Drähten aufgebaute Statorwicklungen 4 angeordnet, deren Leitungsenden zu einem axial endseitigen Wicklungskopf 17 herausgeführt sind. Außerdem ist in dem Stator 2 nicht dargestelltes Isolationsmaterial angeordnet, mittels dem elektrisch voneinander zu trennende Bauteile voneinander beabstandet sind.

Der Stator 2 ist in der Imprägniervorrichtung 1 hinsichtlich seiner Längsachse 15 unter einem Neigungswinkel α zu einer Horizontalen 16 schräg gestellt aufgenommen, wobei der Neigungswinkel zwischen 0° und 20° betragen kann. Eine diesbezügliche Schwenkbewegung 25 des Stators 2 ist in Fig. 1 durch einen Doppelpfeil veranschaulicht.

Der Stator 2 ist in der Imprägniervorrichtung 1 drehbar gelagert angeordnet sowie von einem elektrischen Antriebsmotor 12 um seine Längsachse 15 antreibbar. Hierzu ist der Antriebsmotor 12 mit seiner Motorwelle 29 über eine nicht maßstabsgerecht dargestellte Antriebswelle 58 mit einer den Stator 2 tragenden Einspannvorrichtung 34 verbunden. Der Antriebsmotor 12 ist außerdem über eine gestrichelt gezeichnete Steuerungsleitung 62 mit einem Steuerungsgerät 19 der Imprägniervorrichtung 1 verbunden.

Die Einspannvorrichtung 34 besteht in dem dargestellten Ausführungsbeispiel im Wesentlichen aus einem Spannstab 68 und zwei radial segmentierte Einspannscheiben 26, 27. Die beiden Einspannscheiben 26, 27 weisen jeweils eine zentrische Bohrung auf, durch die der Spannstab 68 koaxial hindurch geführt ist. Die erste, antriebsmotornahe Einspannscheibe 26 stützt sich mit einer Stirnseite axial an der Antriebswelle 58 sowie mit ihrer anderen Stirnseite an dem antriebsmotornahen, radial inneren Ende des Rahmens 3 des Stators 2 ab. Die zweite Einspannscheibe 27 stützt sich mit ihrer antriebsmotornahen Stirnseite an dem antriebsmotorfernen, radial inneren Ende des Rahmens 3 des Stators 2 ab. Der Spannstab 68 ist mit seinem antriebsmotornahen Ende lösbar an die Antriebswelle 58 angekuppelt, während auf dessen antriebsmotorfernen Ende eine Schraubenmutter 59 aufgeschraubt ist. Ein Anziehen der Schraubenmutter 59 verspannt alle genanten Bauteile der Einspannvorrichtung 34 sowie den Stator 2 gegeneinander sowie mit der Antriebswelle 58. Im Ergebnis ist der Stator 2 mittels der Einspannvorrichtung 34 an der Antriebswelle 58 lösbar fixiert und mit dieser zusammen um seine Längsachse 15 drehbar.

Der Stator 2 ist über einen vergleichsweise kurzen axialen Abschnitt koaxial von einem Induktor 6 ringförmig umgeben, der als elektrische Spule ausgebildet ist. Der Induktor 6 besteht aus einem wendelförmig gebogenen Rohr 20, durch das ein Kühlmittel führbar ist. Der Induktor 6* kann aber auch ein Flächengebilde sein, beispielsweise eine weitgehend hohlzylindrische Geometrie aufweisen (siehe Fig. 3). Deutlich ist bei dem in Fig. 1 gezeigten Ausführungsbeispiel erkennbar, dass die axiale Länge des Induktors 6 kürzer ist als die axiale Länge des Stators 2. Der Induktor 6 ist über Leitungen 21, 22 mit einer als Frequenzumrichter arbeitenden Spannungsquelle 23 verbunden, die eine Wechselspannung der gewünschten Frequenz erzeugen kann. Zur Steuerung des Betriebs der Spannungsquelle 23 ist diese über eine Steuerungsleitung 63 mit dem Steuerungsgerät 19 verbunden. Im Betrieb des Induktors 6 strömt durch diesen ein Wechselstrom und erzeugt dabei ein magnetisches Wechselfeld, welches in allen elektrisch leitenden Bauteilen des Stators 2 Wirbelströme erzeugt, welche diese Bauteile gleichzeitig aufheizen. Durch Wärmestrahlung oder Wärmeleitung werden auch benachbarte, elektrisch isolierende Werkstoffe des Stators 2 mit aufgeheizt.

Der Induktor 6 ist mittels eines Aktuators 13 koaxial zum Stator 2 verschiebbar angeordnet. Der Aktuator 13 ist zu seiner Steuerung über eine gestrichelt gezeichnete Steuerungsleitung 61 mit dem Steuerungsgerät 19 verbunden. Mittels des Aktuators 13 kann der Induktor 6 zwischen einer ersten axialen Endposition A und einer zweiten axialen Endposition B hin und her bewegt werden. Diese Bewegungsrichtungen 18 des Induktors 6 sind durch einen Doppelpfeil veranschaulicht. In Fig. 1 ist der Induktor 6' in der zweiten Endposition B mit gepunkteter Linie dargestellt.

Da der Induktor 6 im Vergleich mit dem Stator 2 eine geringere axiale Länge aufweist und von dem Aktuator 13 ständig zwischen den beiden axialen Endpositionen A, B hin und her bewegt wird, kann eine weitgehend gleichmäßige Erwärmung aller Bestandteile des Stators 2 erreicht werden. Wenn der Induktor 6 nach einer Wärmebehandlung des ersten axialen Endabschnittes des Stators 2 diesen Ort in Richtung zum zweiten axialen Endabschnitt verlassen hat, kann die am ersten Endabschnitt des Stators 2 vorhandene Wärme im Inneren desselben an alle dortigen Bauteile weitergegeben werden, so dass auch elektrisch nicht leitende Bauteile des Stators 2 vergleichsweise gleichmäßig zusammen mit den elektrisch leitenden Bauteilen aufgeheizt werden. Hierdurch wird auch eine zu schnelle und zu starke Aufheizung zum Beispiel der metallischen Bauteile des Stators 2 vermieden, in deren Folge ansonsten nichtmetallische Bauteile des Stators 2, wie beispielsweise Materialien zur elektrischen Isolation, geschädigt werden würden. Gleiches geschieht auch an dem zweiten axialen Endabschnitt des Stators 2 sowie in dem axial dazwischen angeordneten Bereich desselben.

Außerdem ist ein Temperatursensor 14 vorhanden, mit dem die Oberflächentemperatur des Stators 2 messbar ist. Die Temperaturmessung erfolgt dabei berührungslos, und der Temperatursensor 14 ist über eine gestrichelt gezeichnet Sensorleitung 60 mit dem Steuerungsgerät 19 verbunden.

Wie Fig. 1 weiter zeigt, gehört zu der Imprägniervorrichtung 1 auch eine Träufelvorrichtung 24, zu der ein erster Behälter 10 für einen bei Raumtemperatur flüssigen Kunstharz und ein zweiter Behälter 11 für einen flüssigen Härter gehört. Über in zugeordneten Leitungen angeordnete Ventile 56, 57 wird Kunstharz und Härter in einem vorbestimmten Mengenverhältnis in einen Mischbehälter 9 geführt. Die beiden Ventile 56, 57 sind über Steuerungsleitungen 64, 65 mit dem Steuerungsgerät 19 verbunden. Von dem Mischbehälter 9 wird das Kunstharz-Härter-Gemisch 5 mittels einer Pumpe 8 zu wenigstens einer Träufeldüse 7, 7a, 7b geleitet, über die das Kunstharz-Härter-Gemisch 5 auf den Wicklungskopf 17 des Stators 2 mit einem vergleichsweise geringen Volumenstrom träufelbar ist. Wie schon erwähnt kann auch ein einkomponentiges Kunstharz verwendet werden, welches sich ebenfalls bei Temperaturerhöhung zu einen Duroplast verfestigt. In diesem Fall kann auf den zweiten Behälter 11, das zweite Ventil und den Mischbehälter 9 verzichtet werden. Zur Steuerung des Betriebs der vorzugsweise als Schlauchpumpe ausgebildeten Pumpe 8 ist diese über eine Steuerungsleitung 66 mit dem Steuerungsgerät 19 verbunden. Der Volumenstrom ist dabei so groß, dass gerade soviel von dem Kunstharz-Härter-Gemisch 5 auf den Wicklungskopf 17 gelangt, wie von dem Stator 2 zum Auffüllen seiner Hohlräume aufgenommen werden kann.

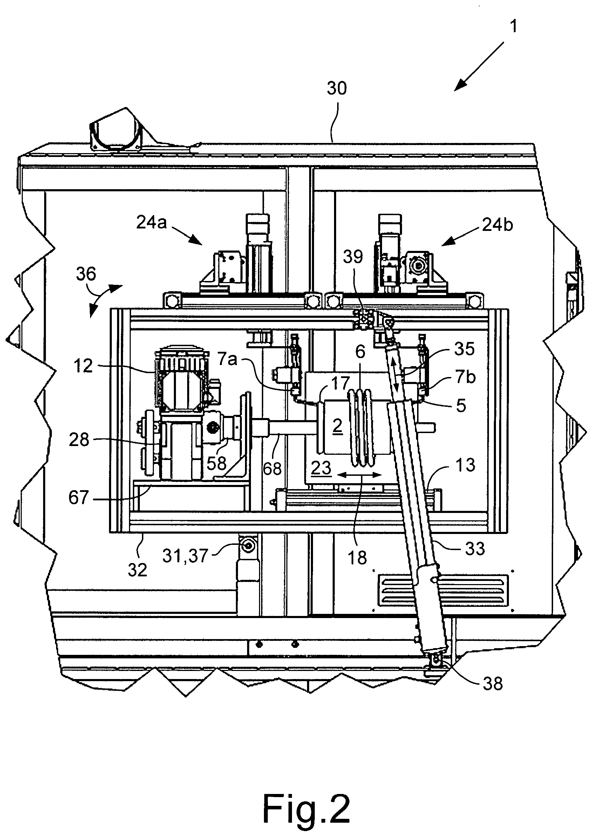

Fig. 2 zeigt in einem Ausschnitt aus einer Imprägniervorrichtung 1 deren wichtigsten Bestandteile in einem bauteilgerecht dargestellten Ausführungsbeispiel. Die Imprägniervorrichtung 1 weist demnach ein Gestell 30 auf, welches eine zur Horizontalen 16 vertikal schwenkbare oder kippbare Haltevorrichtung 32 trägt. Die Haltevorrichtung 32 weist einen rahmenförmigen Aufbau auf und ist über ein erstes Schwenklager 37 um eine horizontal ausgerichtete Schwenkachse 31 schwenkbar an dem Gestell 30 angelenkt. Die mögliche Schwenkrichtung 36 der Haltevorrichtung 32 ist durch einen Doppelpfeil verdeutlicht.

Zur Durchführung einer Schwenkbewegung dient ein Schwenkaktor 33, welcher elektromotorisch oder von einem Druckmittel antreibbar ausgebildet sein kann. Im vorliegenden Ausführungsbeispiel handelt es sich um eine elektromotorisch antreibbare Stellglied-Gehäuse-Anordnung, deren Gehäuse über ein zweites Schwenklager 38 an dem Gestell 30 angelenkt ist, während dessen axial bewegliches Stellglied über einen kurzen Hebel an einem dritten Schwenklager 39 gelenkig befestigt. Dieses dritte Schwenklager 39 ist an einem Rahmenteil der Haltevorrichtung 32 verstellbar befestigt. Durch ein Verstellen der Position des dritten Schwenklagers 39 an der Haltevorrichtung 32 ist der bei einem maximalen Ausfahren des Stellglieds aus dem Gehäuse des Schwenkaktors 33 höchstens erreichbare Kippwinkel oder Neigungswinkel α der Haltevorrichtung 32 in Bezug zur Horizontalen 16 einstellbar. Das Stellglied des Schwenkaktors 33 wird hierzu in einer durch einen Doppelpfeil veranschaulichten Stellrichtung 35 bewegt.

An der rahmenförmigen Haltevorrichtung 32 ist ein Lagerbock 67 befestigt, welcher den elektrischen Antriebsmotor 12 trägt, der über ein Getriebe 28 mit der schon bei der Beschreibung der Fig. 1 erwähnten Antriebswelle 58 verbunden ist. Diese Antriebswelle 58 ist in einem nicht weiter bezeichneten Wellenlager drehbar gelagert und an deren getriebefernen Ende mit dem Spannstab 68 der bereits geschilderten Einspannvorrichtung 34 drehfest, jedoch lösbar verbunden. Der Spannstab 68 trägt wie beschrieben über zwei Einspannscheiben 26, 27 den Stator 2, so dass dieser im Ergebnis von dem Antriebsmotor 12 drehbar sowie mittels dem Schwenkaktor 33 und der Haltevorrichtung 32 gegenüber der Horizontalen 16 um einen Neigungswinkel α kippbar in einen Raum hinein ragt, in dem der Induktor 6 angeordnet ist.

Der Induktor 6 ist mit der diesem zugeordneten Spannungsquelle 23 ebenfalls an der rahmenförmigen Haltevorrichtung 32 angeordnet, so dass diese bei einer Schwenkbewegung gegenüber der Horizontalen 16 ebenfalls mit verschwenkt werden. Die Spannungsquelle 23 und der mit dieser elektrisch verbundene Induktor 6 sind mittels des Aktuators 13 koaxial beziehungsweise parallel zum Stator 2 axial verschiebbar in der Haltevorrichtung 32 angeordnet. Es ist vorgesehen, dass die Spannungsquelle 23 an dem Gestell 30 befestigt ist und lediglich der Induktor 6 über geeignete Verbindungsmittel mit dem Stellglied des erwähnten Aktuators 13 verbunden ist, so dass der Induktor 6 alleine axial bewegbar angeordnet ist. Der Induktor 6 umgibt den zylindrischen Stator 2 koaxial, wie im Zusammenhang mit der Fig. 1 bereits ausführlich geschildert wurde. Da der Induktor 6 auch in dem in Fig. 2 dargestellten Ausführungsbeispiel axial kürzer ist als der Stator 2, wird er im Betrieb der Imprägniervorrichtung 1 von den Aktuator 13 axial hin und her bewegt, so dass alle Bereiche des Stators 2 von dem magnetischen Wechselfeld des Induktors 6 wechselweise beaufschlagt werden. Hierdurch wird eine gleichmäßige Aufheizung und Aufrechterhaltung der gewünschten Träufeltemperatur beziehungsweise Aushärtetemperatur des Stators 2 erreicht.

Die bei der Beschreibung der Fig. 1 bereits vorgestellte Träufelvorrichtung 24 ist
ebenfalls an der Haltevorrichtung 32 befestigt, so dass diese bei einem Verkippen der Haltevorrichtung 32 in Bezug zur Horizontalen 16 ebenfalls mit verschwenkt wird. Die Träufelvorrichtung 24 besteht bei in dem in Fig. 2 dargestellten Ausführungsbeispiel aus zwei weitgehend identischen Träufelvorrichtungen 24a, 24b, welche parallel zu der Längsachse 15 des Stators 2 an dem Rahmen der Haltevorrichtung 32 verstellbar angeordnet sind. Deren Träufeldüsen 7a, 7b sind hin zu den beiden axialen Enden des Stators 2 einstellbar ausgerichtet, so dass das Aufträufeln des Kunstharz-Härter-Gemisches 5 auf den Wicklungskopf 17 des Stators 2 an dessen beiden axialen Enden erfolgen kann. Welches der beiden axialen Enden des Stators 2 mit dem Kunstharz-Härter-Gemisch 5 versorgt wird, hängt beispielsweise davon ab, ob das freie, antriebsmotorferne Ende des Stators 2 in Bezug zur Horizontalen 16 nach unten oder nach oben zeigt, oder anders ausgedrückt, ob der Neigungswinkel α positiv oder negativ ist. Die Träufeldüsen 7a, 7b der Träufelvorrichtungen 24a, 24b können auch so eingestellt sein, dass beide axiale Enden des Stators 2 mit dem Kunstharz-Härter-Gemisch 5 beträufelt werden. Außerdem ist es möglich, dass an beiden axialen Enden des Stators 2 jeweils zwei der Träufeldüsen 7a, 7b angeordnet sind, von denen jeweils eine Träufeldüse radial außen und die andere Träufeldüse radial innen auf die Wicklungen 4 gerichtet ist.

Fig. 3 zeigt einen schematischen Querschnitt durch den Stator 2 gemäß Fig. 1, in dessen weitgehend zylindrischen Hohlraum 69 koaxial zu dessen Längsachse 15 ein zylindrischer, elektromagnetischer Induktor 6* angeordnet ist. Bei Bedarf kann auch dieser Induktor 6* axial hin und her bewegt werden, und wie beschrieben hinsichtlich seiner Aktivierung gesteuert werden. Die Erwärmung aller Bauteile des Stators 2 erfolgt dann wie bereits erläutert.

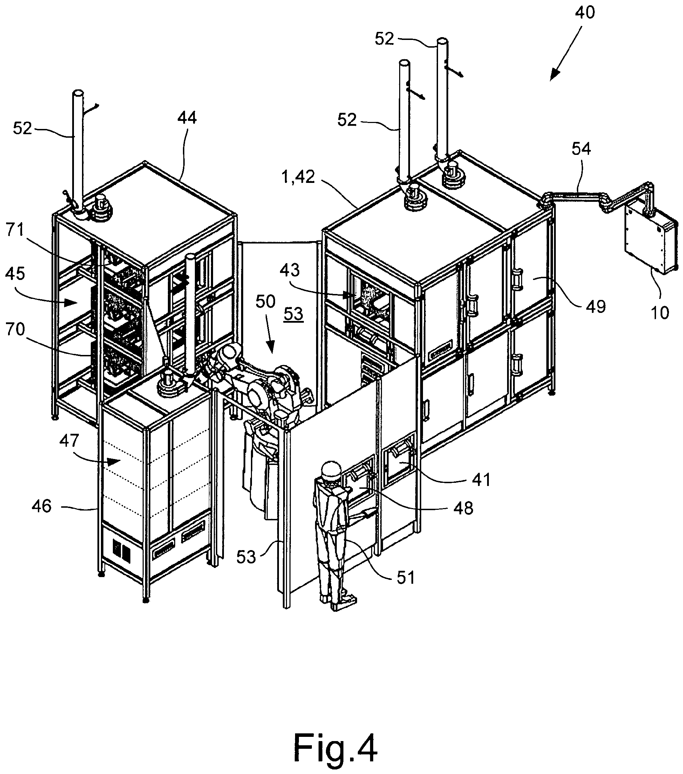

Fig. 4 zeigt eine dreidimensionale Draufsicht auf eine Fertigungsanlage 40 zur Träufelimprägnierung eines Stators 2 oder Ankers einer Elektromaschine mit einem unter Temperaturerhöhung aushärtenden Kunstharz oder Kunstharz-Härter-Gemisch 5. Diese Fertigungsanlage 40 besteht aus einem Eingangsmodul 41 zur Lagerung von nicht imprägnierten Statoren 2 oder nicht imprägnierten Ankern, einem Imprägniermodul 42 mit einer Imprägniervorrichtung 1, welche die Merkmale von zumindest einem der Ansprüche 1 bis 14 aufweist, ein Abkühlmodul 46 zur abkühlenden Lagerung imprägnierter Statoren 2 oder Anker, ein Ausgangsmodul 48 zur Lagerung abgekühlter und imprägnierter Statoren 2 oder Anker, und einen ersten Handhabungsautomaten 50 für den Transport des jeweiligen Stators 2 oder Ankers zwischen dem Eingangsmodul 41, dem Imprägniermodul 42, dem Abkühlmodul 46 und dem Ausgangsmodul 48. Dazu ist der erste Handhabungsautomat 50 derartig ausgebildet ist, dass dieser den jeweiligen Stator 2 oder Anker festhalten, in Bezug zur Horizontalen 16 kippen, um dessen Längsachse 15 drehen, koaxial oder achsparallel zu einem Induktor 6, 6* anordnen sowie in Bezug zu dem ortsfesten oder axial beweglichen Induktor 6, 6* axial bewegen kann.

Bei dieser Ausbildung der Fertigungsanlage 40 beziehungsweise des ersten Handhabungsautomaten 50 sind die kippbare, rahmenförmige Haltevorrichtung 32, der Schwenkaktor 33, der gesonderte Antriebsmotor 12, das Getriebe 28 und die Antriebswelle 58 nicht notwendig, da deren Funktionen durch den ersten Handhabungsautomaten 50 durchführbar sind.

Weiter ist bei dem in Fig. 4 gezeigten Ausführungsbeispiel ein gesondertes Aushärtemodul 44 vorhanden, in dem weitgehend ausgehärtete Statoren 2 oder Anker zu einem abschließenden, vollständigen Aushärten angeordnet werden, wobei der erste Handhabungsautomat 50 auch dieses Aushärtemodul 44 befüllen und entleeren kann. Durch die Anordnung dieses Aushärtemoduls 44 kann die gegen Ende des Aushärtevorgangs im Stator 2 oder Anker vorhandene Wärme dazu genutzt werden, um unter bereits erfolgender geringer Abkühlung des Stators 2 oder Ankers diesen fern von dem Imprägniermodul 42 vollständig aushärten zu lassen. Hierdurch kann das Imprägniermodul 42 früher als ohne diese Maßnahme mit einem noch zu beträufelnden Stator 2 oder Anker neu beschickt werden.

Die beträufelten Statoren 2 oder Anker können aber auch schon dann in das Aushärtemodul 44 eingesetzt werden, wenn nach dem Ende des Träufelvorgangs und einem dann folgenden Anheben der Temperatur des Stators 2 oder Ankers die Gelierung des Kunstharz-Härter-Gemisches 5 bereits stattgefunden hat. In diesem Fall ist das Aushärtemodul 44 mit Aufnahmevorrichtungen für Statoren 2 und/oder Anker ausgerüstet, auf die der erste Handhabungsautomat 50 diese aufstecken kann, so dass das eigentliche Aushärten eben in diesem Aushärtemodul 44 stattfindet. Hierzu weist das Aushärtemodul 44 zumindest einen Induktor 70 zum Aufheizen der Statoren 2 oder Anker auf die Aushärtetemperatur sowie für jeden dort abzustellenden Stator 2 oder Anker einen separaten Drehabtrieb 71 auf. Dadurch könnte in das Imprägniermodul 42 noch früher als ohne diese Maßnahme ein zu beträufelnden Stator 2 oder Anker eingebracht werden, so dass sich die Ausbringrate von fertigen Statoren oder Ankern pro Zeiteinheit weiter vergrößern ließe.

Die in Fig. 4 dargestellte Fertigungsanlage 40 verfügt auch über ein Lagermodul 49, in dem Kunstharz-Behälter 10 und Härter-Behälter 11 lagerbar sind, welche von einem zweiten Handhabungsautomaten 54 in das Lagermodul 49 einsetzbar und herausnehmbar sind. Zudem ist erkennbar, dass die thermisch oder fremdstoffbelasteten Module 42, 44, 46, 49 der Fertigungsanlage 40 Abluftkanäle 52 aufweisen.

Die Module 41, 42, 44, 46, 48, 49 der Fertigungsanlage 40 sind wie dargestellt vorteilhaft als Schränke oder Kabinen ausgebildet. Diese weisen am Beispiel des Imprägniermoduls 42 Eintrittsöffnungen 43 zum Befüllen und Entleeren des jeweiligen Moduls auf. Zudem ist erkennbar, dass das Aushärtemodul 44 und das Abkühlmodul 46 Regale 45, 47 aufweisen, in denen Statoren 2 oder Anker zwischenlagerbar sind. Um die Fertigungsanlage 40 als gekapselte Fertigungsinsel auszubilden sind Absperrwände 53 angeordnet, die einen unberechtigten Zutritt für Personen 51 zumindest erschweren.

Die vorgestellte Imprägniervorrichtung 1 zur Träufelimprägnierung eines Stators 2 oder Ankers einer Elektromaschine zeichnet sich durch deren einfache Regelbarkeit sowie schnelle und homogene Erwärmung des Stators 2 oder Ankers aus. Sie ermöglicht im Vergleich zu bekannten Imprägniervorrichtungen eine weitgehend zeitgleiche Erwärmung aller Bauteile des Stators 2 oder Ankers, ohne dass die Gefahr besteht, dass beispielsweise thermisch weniger stabile Bauteile, wie etwa Isolationsmaterialien, durch eine Überhitzung verbrennen oder zumindest in deren gewollten Eigenschaften beeinträchtigt werden. Außerdem erfolgt die induktive Erwärmung des Stators 2 oder Ankers wegen ihres thermisch höheren Wirkungsgrades sehr viel energiesparender als bei einer Erwärmung derselben in einem Heizofen oder mittels eines elektrischen Heizstromes, der durch die Wicklung des Stators 2 oder Ankers geleitet wird, denn im letzteren Fall dienen nur die Wicklungsleitungen zum Aufheizen des Stators 2 oder Ankers, während bei einer induktiven Erwärmung derselben alle elektrisch leitenden Bauteile gleichzeitig erhitzt werden. Schließlich braucht bei der Nutzung der erfindungsgemäßen Imprägniervorrichtung 1 keiner der Wicklungsdrähte an eine elektrische Spannungsquelle angeschlossen und mit einem Heizstrom versorgt werden, so dass der Montagevorgang in der Imprägniervorrichtung 1 im Vergleich zu der eingangs geschilderten bekannten Heizstromvorrichtung deutlich reduziert ist. Insgesamt bewirken die genannten Vorteile eine deutliche Verringerung der Produktionszeit und damit der Herstellkosten.

Die vorgestellte Fertigungsanlage 40 ermöglicht zudem eine vollautomatische Imprägnierung eines Stators 2 oder Ankers. Sofern der erste Handhabungsautomat 50 an seinem Handhabungsarm eine antreibbare Antriebswelle sowie eine mit dieser Antriebswelle verbundene Einspannvorrichtung 34 zum Halten eines Stators 2 oder Ankers aufweist, kann auch das Ergreifen des Stators 2 oder Ankers sowie das Einspannen desselben ebenso vollautomatisch erfolgen wie das Loslassen des fertig imprägnierten Stators 2 oder Ankers von dem Handhabungsarm.

## Patentansprüche

1. Imprägniervorrichtung (1) zur Träufelimprägnierung eines Stators (2) oder Ankers einer Elektromaschine mit einem unter Temperaturerhöhung aushärtenden Kunstharz (5), aufweisend
- eine in Bezug zur Horizontalen (16) vertikal kippbare Haltevorrichtung (32),
an welcher ein Antriebsmotor (12) als Rotationsantrieb für den Stator (2) oder Anker befestigt ist,
- eine mit dem Antriebsmotor (12) antriebswirksam verbundene Antriebswelle (58),
- eine mit der Antriebswelle (58) drehfest verbundene Einspannvorrichtung (34), mittels welcher der Stator (2) oder Anker mit der Antriebswelle (58) lösbar verbindbar ist,
- eine Träufelvorrichtung (24; 24a, 24b), mittels der ein Kunstharz (5) auf zumindest ein axiales Ende der Wicklungen (4) des Stators (2) oder Ankers leitbar ist,
- und eine Heizvorrichtung, mittels welcher die Wicklungen (4) des Stators (2) oder Ankers auf eine Träufeltemperatur sowie auf eine im Vergleich dazu höhere Aushärtetemperatur aufheizbar sind,
**dadurch gekennzeichnet, dass** die Heizvorrichtung einen elektromagnetischen Induktor (6, 6*) aufweist, welcher koaxial oder achsparallel zum Stator (2) oder Anker angeordnet ist,
wobei der Induktor (6, 6*) mit einer als Frequenzumrichter arbeitenden Spannungsquelle (23) elektrisch verbunden ist, wobei der Induktor (6, 6*) und seine Spannungsquelle (23) mit einem Stellglied eines Aktuators (13) verbunden sind, mittels dem der Induktor (6, 6*) koaxial oder achsparallel und die Spannungsquelle (23) parallel zur Längsachse (15) des Stators (2) oder Ankers hin und her bewegbar an der Haltevorrichtung (32) angeordnet sind.

2. Imprägniervorrichtung nach Anspruch 1, **dadurch gekennzeichnet, dass** der Induktor (6, 6*) nur über einen Abschnitt der axialen Länge des Stators (2) oder Ankers koaxial oder achsparallel zu diesem angeordnet ist.

3. Imprägniervorrichtung nach Anspruch 1, **dadurch gekennzeichnet, dass** der Induktor (6, 6*) über die gesamte axialen Länge des Stators (2) oder Ankers koaxial oder achsparallel zu diesem angeordnet ist.

4. Imprägniervorrichtung nach einem der Ansprüche 1 bis 3, **dadurch gekennzeichnet, dass** der Induktor (6) radial über dem Stator (2) oder Anker angeordnet ist.

5. Imprägniervorrichtung nach einem der Ansprüche 1 bis 3, **dadurch gekennzeichnet, dass** der Induktor (6*) radial innerhalb des Stators (2) angeordnet ist.

6. Imprägniervorrichtung nach einem der Ansprüche 1 bis 5, **gekennzeichnet durch**
- ein Gestell (30),
- eine an dem Gestell (30) mittels eines ersten Schwenklagers (37) um eine horizontale Schwenkachse (31) kippbar angeordnete Haltevorrichtung (32),
- einen Schwenkaktor (33) zur Verschwenkung der Haltevorrichtung (32) an dem ersten Schwenklager (37) in Bezug zum Gestell (30),
- einen an der Haltevorrichtung (32) befestigten Antriebsmotor (12),
- eine mit dem Antriebsmotor (12) antriebswirksam verbundene Antriebswelle (58),
- eine mit der Antriebswelle (58) drehfest verbundene Einspannvorrichtung (34), mittels welcher der Stator (2) oder Anker mit der Antriebswelle (58) lösbar verbindbar ist, wobei zumindest ein Bauteil dieser Einspannvorrichtung (34) radial innen an dem Stator (2) oder radial außen an dem Anker angreift,
- und einen elektromagnetischen Induktor (6, 6*), welcher koaxial oder achsparallel zu dem den Stator (2) oder Anker sowie zu der Einspannvorrichtung (34) angeordnet ist.

7. Imprägniervorrichtung nach Anspruch 6, **dadurch gekennzeichnet, dass** die Einspannvorrichtung (34) zumindest einen Spannstab (68) aufweist, welcher radial innen den Stator (2) axial durchdringt, und dass der Spannstab (68) direkt oder mittelbar mit dem Stator (2) verbunden ist.

8. Imprägniervorrichtung nach Anspruch 7, **dadurch gekennzeichnet, dass** der Spannstab (68) axial endseitig mit wenigstens zwei Spannbacken oder zumindest zwei radial segmentierte Einspannscheiben (26, 27) verbunden ist, dass diese Spannbacken oder Einspannscheiben (26, 27) an jeweils einem axialen Ende des Rahmens (3) des Stators (2) radial innen anliegend angeordnet sind, und dass mittels des Spannstabs (68) die beiden Spannbacken oder Einspannscheiben (26, 27) gegen den Stator (2) verspannbar sind, so dass dieser an dem Spannstab (68) fixiert ist.

9. Imprägniervorrichtung nach einem der Ansprüche 1 bis 8, **dadurch gekennzeichnet, dass** eine Träufelvorrichtung (24) vorhanden ist, welche einen Behälter (10) für Kunstharz, einen Behälter (11) für Härter, einen Mischbehälter (9), Absperrventile (54, 55) in Leitungen zwischen diesen Behältern (9, 10, 11) sowie eine Pumpe (8) aufweist, und bei der die Pumpe (9) mit wenigstens einer Träufeldüse (7, 7a, 7b) über eine Zuleitung verbunden ist, mittels der das Kunstharz (5) auf die Wicklungen (4) des Stators (2) oder Ankers aufträufelbar ist.

10. Imprägniervorrichtung nach einem der Ansprüche 1 bis 9, **dadurch gekennzeichnet, dass** ein Temperatursensor (14) vorhanden ist, mittels dem die Außentemperatur des Stators (2) oder Ankers berührungslos messbar ist.

11. Imprägniervorrichtung nach einem der Ansprüche 1 bis 10, **dadurch gekennzeichnet, dass** ein Steuerungsgerät (19) vorhanden ist, welches über eine Sensorleitung (60) mit dem Temperatursensor (14) sowie über Steuerungsleitungen (61, 62, 63, 64, 65, 66) mit dem Antriebsmotor (12), dem Aktuator (13), den Absperrventilen (54, 55) zwischen den Behältern (10, 11) für Kunstharz und Härter sowie dem Mischbehälter (9), der Pumpe (8) zur Förderung des Kunstharz-Härter-Gemisches (5), und der Spannungsquelle (23) für den Induktor (6, 6*) verbunden ist.

12. Fertigungsanlage (40) zur Träufelimprägnierung eines Stators (2) oder Ankers einer Elektromaschine mit einem unter Temperaturerhöhung aushärtenden Kunstharzes (5), aufweisend
- ein Eingangsmodul (41) zur Lagerung nicht imprägnierter Statoren (2) oder nicht imprägnierten Anker,
- ein Imprägniermodul (42) mit einer einen elektromagnetischen Induktor (6, 6*) aufweisenden Imprägniervorrichtung (1) mit den Merkmalen von zumindest einem der Ansprüche 1 bis 11 zur Träufelimprägnierung von Statoren (2) oder Anker,
- ein Abkühlmodul (46) zur abkühlenden Lagerung imprägnierter Statoren (2)
oder Anker,
- ein Ausgangsmodul (48) zur Lagerung abgekühlter und imprägnierter Statoren (2) oder Anker, und
- einen ersten Handhabungsautomaten (50) für den Transport des jeweiligen Stators (2) oder Ankers zwischen dem Eingangsmodul (41), dem Imprägniermodul (42), dem Abkühlmodul (46) und dem Ausgangsmodul (48),
- wobei der erste Handhabungsautomat (50) derartig ausgebildet ist, dass dieser den jeweiligen Stator (2) oder Anker festhalten, in Bezug zur Horizontalen (16) kippen, um dessen Längsachse (15) drehen, koaxial zu einem hohlzylindrischen oder spulenförmigen Induktor (6, 6*) anordnen, sowie in Bezug zu dem axial beweglichen Induktor (6, 6*) axial hin und her bewegen kann.

13. Fertigungsanlage gemäß Anspruch 12, **dadurch gekennzeichnet, dass** ein Aushärtemodul (44) vorhanden ist, in welches Statoren (2) oder Anker zu einem vollständigen Aushärten angeordnet werden, und dass der erste Handhabungsautomat (50) so ausgebildet ist, dass dieser auch das Aushärtemodul (44) befüllen und entleeren kann.

14. Fertigungsanlage gemäß Anspruch 13, **dadurch gekennzeichnet, dass** das Aushärtemodul (44) einen eigenen Induktor (70) aufweist, mittels dem in dem Aushärtemodul (44) abgestellte Statoren (2) oder Anker zum vollständigen Aushärten beheizt werden können.

15. Fertigungsanlage gemäß Anspruch 13 oder 14, **dadurch gekennzeichnet, dass** das Aushärtemodul (44) für jeden dort abzustellenden Stator (2) oder Anker einen separaten Drehabtrieb (71) aufweist, mittels dem der jeweilige Stator (2) oder Anker während seines Aushärtens um dessen Längsachse gedreht werden kann.

16. Fertigungsanlage gemäß einem der Ansprüche 13 bis 15, **dadurch gekennzeichnet, dass** ein Lagermodul (49) vorhanden ist, in dem Behälter (10) für Kunstharz und Behälter (11) für Härter lagerbar sind, und dass dieses Lagermodul (49) von dem ersten Handhabungsautomaten (50) oder von einem zweiten Handhabungsautomaten (54) befüllbar und entleerbar ist.

## Claims

1. An impregnation device (1) for trickle impregnation of a stator (2) or armature of an electric machine with a synthetic resin (5) curing under temperature increase, comprising
- a holding device (32) which can be tilted vertically with respect to the horizontal (16), and to which a drive motor (12) is attached as a rotary drive for the stator (2) or the armature,
- a drive shaft (58) operatively connected to the drive motor (12),
- a clamping device (34) which is non-rotatably connected to the drive shaft (58) and capable of detachably connecting the stator (2) or the armature to the drive shaft (58),
- a trickle device (24; 24a, 24b) capable of applying a synthetic resin (5) onto at least one axial end of windings (4) of the stator (2) or the armature,
- and a heating device capable of heating the windings (4) of the stator (2) or the armature to a trickle temperature and to a comparatively higher curing temperature,
**characterized in that** the heating device comprises an electromagnetic inductor (6, 6*) which is arranged coaxially or axially parallel to the stator (2) or the armature,
wherein the inductor (6, 6*) is electrically connected to a voltage source (23) which operates as a frequency converter,
wherein the inductor (6, 6*) and its voltage source (23) are connected to an actuating element of an actuator (13) capable of arranging the inductor (6, 6*) on the holding device (32) so as to be movable back and forth coaxially or axially parallel to the longitudinal axis (15) of the stator (2) or the armature, and arranging the voltage source (23) on the holding device (32) so as to be movable back and forth parallel to the longitudinal axis (15) of the stator (2) or the armature.

2. The impregnation device according to claim 1, **characterized in that** the inductor (6, 6*) is arranged coaxially or axially parallel to the stator (2) or the armature only over a portion of the axial length of the same.

3. The impregnation device according to claim 1, **characterized in that** the inductor (6, 6*) is arranged coaxially or axially parallel to the stator (2) or the armature over the entire axial length of the same.

4. The impregnation device according to one of the claims 1 to 3, **characterized in that** the inductor (6) is arranged radially above the stator (2) or the armature.

5. The impregnation device according to one of the claims 1 to 3, **characterized in that** the inductor (6*) is arranged radially inside the stator (2).

6. The impregnation device according to one of the claims 1 to 5, **characterized by**
- a frame (30),
- a holding device (32) which is arranged on the frame (30) by means of a first pivot bearing (37) so as to be tiltable about a horizontal pivot axis (31),
- a pivot actuator (33) for pivoting the holding device (32) on the first pivot bearing (37) with respect to the frame (30),
- a drive motor (12) attached to the holding device (32),
- a drive shaft (58) operatively connected to the drive motor (12),
- a clamping device (34) which is non-rotatably connected to the drive shaft (58) and capable of detachably connecting the stator (2) or the armature to the drive shaft (58), wherein at least one component of the clamping device (34) engages radially inwardly on the stator (2) or radially outwardly on the armature,
- and an electromagnetic inductor (6, 6*) which is arranged coaxially or axially parallel to the stator (2) or the armature and to the clamping device (34).

7. The impregnation device according to claim 6, **characterized in that** the clamping device (34) comprises at least one clamping rod (68) which axially penetrates the stator (2) radially inside, and **in that** the clamping rod (68) is connected directly or indirectly to the stator (2).

8. The impregnation device according to claim 7, **characterised in that** the clamping rod (68) is connected at its axial end to at least two clamping jaws or at least two radially segmented clamping discs (26, 27), **in that** these clamping jaws or clamping discs (26, 27) are arranged respectively abutting radially inwardly at an axial end of the frame (3) of the stator (2), and **in that** the two clamping jaws or clamping discs (26, 27) can be clamped against the stator (2) by means of the clamping rod (68), so that the former is fixed to the clamping rod (68).

9. The impregnation device according to one of the claims 1 to 8, **characterized in that** a trickle device (24) is provided which comprises a container (10) for a synthetic resin, a container (11) for a hardener, a mixing container (9), shut-off valves (54, 55) arranged in pipes between these containers (9, 10, 11), and a pump (8), wherein the pump (9) is connected via a feed pipe to at least one trickle nozzle (7, 7a, 7b) capable of trickling the synthetic resin (5) onto the windings (4) of the stator (2) or the armature.

10. The impregnation device according to one of the claims 1 to 9, **characterized in that** a temperature sensor (14) is provided, which is capable of contactlessly measuring the outside temperature of the stator (2) or the armature.

11. The impregnation device according to one of the claims 1 to 10, **characterized in that** a control unit (19) is provided which is connected via a sensor cable (60) to the temperature sensor (14) and via control cables (61, 62, 63, 64, 65, 66) to the drive motor (12), the actuator (13), the shut-off valves (54, 55) between the containers (10, 11) for the synthetic resin and the hardener and the mixing container (9), the pump (8) for delivering the synthetic resin-hardener mixture (5), and the voltage source (23) for the inductor (6, 6*).

12. A production plant (40) for trickle impregnation of a stator (2) or armature of an electric machine with a synthetic resin (5) curing under temperature increase, comprising
- an input module (41) for storing non-impregnated stators (2) or non-impregnated armatures,
- an impregnation module (42) with an impregnation device (1) comprising an electromagnetic inductor (6, 6*) with the features of at least one of the claims 1 to 11 for trickle impregnation of stators (2) or the armatures,
- a cooling module (46) for cooling down and storing impregnated stators (2) or armatures,
- an output module (48) for storing cooled and impregnated stators (2) or armatures, and
- a first robot (50) for transporting the respective stator (2) or armature between the input module (41), the impregnation module (42), the cooling module (46) and the output module (48),
- wherein the first robot (50) is adapted to hold the respective stator (2) or the armature, tilt it with respect to the horizontal (16), rotate it about its longitudinal axis (15), arrange it coaxially with a hollow cylindrical or coil-shaped inductor (6, 6*), and move it axially back and forth with respect to the axially movable inductor (6, 6*).

13. The production plant according to claim 12, **characterized in that** a curing module (44) is provided, in which stators (2) or armatures are arranged for complete curing, and **in that** the first robot (50) is designed such that it can also fill and empty the curing module (44).

14. The production plant according to claim 13, **characterized in that** the curing module (44) comprises its own inductor (70) capable of heating stators (2) or armatures stored in the curing module (44) for complete curing.

15. The production plant according to claim 13 or 14, **characterized in that** the curing module (44) comprises for each stator (2) or armature to be stored there a separate rotary drive (71) capable of rotating the respective stator (2) or armature about its longitudinal axis during its curing.

16. The production plant according to one of the claims 13 to 15, **characterized in that** a storage module (49) is provided in which containers (10) for synthetic resin and containers (11) for hardener can be stored, and **in that** the storage module (49) can be filled and emptied by the first robot (50) or by a second robot (54).

## Revendications

1. Dispositif d'imprégnation (1) pour l'imprégnation goutte à goutte d'un stator (2) ou induit d'une machine électrique avec une résine synthétique (5) durcissant par élévation de température, présentant
- un dispositif de retenue (32) pouvant basculer verticalement par rapport à l'horizontale (16),
sur lequel est fixé un moteur d'entraînement (12) en tant qu'entraînement rotatif pour le stator (2) ou l'induit,
- un arbre d'entraînement (58) relié à des fins d'entraînement au moteur d'entraînement (12),
- un dispositif de serrage (34) relié de manière solidaire en rotation à l'arbre d'entraînement (58), au moyen duquel le stator (2) ou l'induit peut être relié de manière détachable à l'arbre d'entraînement (58),
- un dispositif de goutte à goutte (24 ; 24a, 24b), au moyen duquel une résine synthétique (5) peut être guidée sur au moins une extrémité axiale des enroulements (4) du stator (2) ou de l'induit,
- et un dispositif de chauffage, au moyen duquel les enroulements (4) du stator (2) ou de l'induit peuvent être chauffés à une température de goutte à goutte ainsi qu'à une température de durcissement plus élevée en comparaison de celle-ci,
**caractérisé en ce que** le dispositif de chauffage présente un inducteur (6, 6*) électromagnétique, lequel est disposé de manière coaxiale ou parallèle à l'axe par rapport au stator (2) ou à l'induit,
dans lequel l'inducteur (6, 6*) est relié électriquement à une source de tension (23) fonctionnant en tant que convertisseur de fréquence, dans lequel l'inducteur (6, 6*) et sa source de tension (23) sont reliés à un élément de commande d'un actionneur (13), au moyen duquel l'inducteur (6, 6*), de manière coaxiale ou parallèle à l'axe, et la source de tension (23), parallèlement à l'axe longitudinal (15) du stator (2) ou de l'induit, sont disposés sur le dispositif de retenue (32) de manière à pouvoir se déplacer en va-et-vient.

2. Dispositif d'imprégnation selon la revendication 1, **caractérisé en ce que** l'inducteur (6, 6*) est disposé uniquement sur une partie de la longueur axiale du stator (2) ou de l'induit de manière coaxiale ou parallèle à l'axe par rapport à celui-ci.

3. Dispositif d'imprégnation selon la revendication 1, **caractérisé en ce que** l'inducteur (6, 6*) est disposé sur toute la longueur axiale du stator (2) ou de l'induit de manière coaxiale ou parallèle à l'axe par rapport à celui-ci.

4. Dispositif d'imprégnation selon l'une quelconque des revendications 1 à 3, **caractérisé en ce que** l'inducteur (6) est disposé radialement au-dessus du stator (2) ou de l'induit.

5. Dispositif d'imprégnation selon l'une quelconque des revendications 1 à 3, **caractérisé en ce que** l'inducteur (6*) est disposé radialement à l'intérieur du stator (2).

6. Dispositif d'imprégnation selon l'une quelconque des revendications 1 à 5, **caractérisé par**
- un bâti (30),
- un dispositif de retenue (32) disposé sur le bâti (30) de manière à pouvoir basculer autour d'un axe de pivotement (31) horizontal au moyen d'un premier palier pivotant (37),
- un actionneur de pivotement (33) pour le pivotement du dispositif de retenue (32) sur le premier palier pivotant (37) par rapport au bâti (30),
- un moteur d'entraînement (12) fixé sur le dispositif de retenue (32),
- un arbre d'entraînement (58) relié à des fins d'entraînement au moteur d'entraînement (12),
- un dispositif de serrage (34) relié de manière solidaire en rotation à l'arbre d'entraînement (58), au moyen duquel le stator (2) ou l'induit peut être relié de manière détachable à l'arbre d'entraînement (58), dans lequel au moins un composant de ce dispositif de serrage (34) vient en contact radialement à l'intérieur avec le stator (2) ou radialement à l'extérieur avec l'induit,
- et un inducteur (6, 6*) électromagnétique, lequel est disposé de manière coaxiale ou parallèle à l'axe par rapport au stator (2) ou à l'induit ainsi que par rapport au dispositif de serrage (34).

7. Dispositif d'imprégnation selon la revendication 6, **caractérisé en ce que** le dispositif de serrage (34) présente au moins une barre de serrage (68), laquelle traverse axialement le stator (2) radialement à l'intérieur, et que la barre de serrage (68) est reliée directement ou indirectement au stator (2) .

8. Dispositif d'imprégnation selon la revendication 7, **caractérisé en ce que** la barre de serrage (68) est reliée axialement côté extrémité à au moins deux mâchoires de serrage ou au moins deux disques de serrage (26, 27) segmentées radialement, que ces mâchoires de serrage ou disques de serrage (26, 27) sont disposés de manière à s'appliquer sur respectivement une extrémité axiale du cadre (3) du stator (2) radialement à l'intérieur, et que les deux mâchoires de serrage ou disques de serrage (26, 27) peuvent être serrés contre le stator (2) au moyen de la barre de serrage (68), de sorte que celui-ci est fixé sur la barre de serrage (68).

9. Dispositif d'imprégnation selon l'une quelconque des revendications 1 à 8, **caractérisé en ce qu'**un dispositif de goutte à goutte (24) est présent, lequel présente un contenant (10) pour une résine synthétique, un contenant (11) pour un durcisseur, un contenant de mélange (9), des soupapes d'arrêt (54, 55) dans des conduites entre ces contenants (9, 10, 11) ainsi qu'une pompe (8), et pour lequel la pompe (9) est reliée à au moins une buse de goutte à goutte (7, 7a, 7b) par l'intermédiaire d'une conduite d'alimentation, au moyen de laquelle la résine synthétique (5) peut être versée en goutte à goutte sur les enroulements (4) du stator (2) ou de l'induit.

10. Dispositif d'imprégnation selon l'une quelconque des revendications 1 à 9, **caractérisé en ce qu'**un capteur de température (14) est présent, au moyen duquel la température extérieure du stator (2) ou de l'induit peut être mesurée sans contact.

11. Dispositif d'imprégnation selon l'une quelconque des revendications 1 à 10, **caractérisé en ce qu'**un appareil de commande (19) est présent, lequel est relié au capteur de température (14) par l'intermédiaire d'une ligne de détection (60) ainsi qu'au moteur d'entraînement (12), à l'actionneur (13), aux soupapes d'arrêt (54, 55) entre les contenants (10, 11) pour la résine synthétique et le durcisseur ainsi qu'au contenant de mélange (9), à la pompe (8) pour le refoulement du mélange résine synthétique-durcisseur (5), et à la source de tension (23) pour l'inducteur (6, 6*) par l'intermédiaire de lignes de commande (61, 62, 63, 64, 65, 66).

12. Installation de fabrication (40) pour l'imprégnation goutte à goutte d'un stator (2) ou induit d'une machine électrique avec une résine synthétique (5) durcissant par élévation de température, présentant
- un module d'entrée (41) pour le stockage de stators (2) non imprégnés ou d'induits non imprégnés,
- un module d'imprégnation (42) avec un dispositif d'imprégnation (1) présentant un inducteur (6, 6*) électromagnétique avec les caractéristiques d'au moins une des revendications 1 à 11 pour l'imprégnation goutte à goutte de stators (2) ou d'induits,
- un module de refroidissement (46) pour le stockage refroidissant de stators (2) ou d'induits imprégnés,
- un module de sortie (48) pour le stockage de stators (2) ou d'induits refroidis et imprégnés, et
- un premier automate de manipulation (50) pour le transport du stator (2) ou de l'induit respectif entre le module d'entrée (41), le module d'imprégnation (42), le module de refroidissement (46) et le module de sortie (48),
- dans laquelle le premier automate de manipulation (50) est réalisé de telle sorte que celui-ci peut retenir le stator (2) ou l'induit respectif, le faire basculer par rapport à l'horizontale (16), le faire tourner autour de l'axe longitudinal (15) de celui-ci, le disposer de manière coaxiale par rapport à un inducteur (6, 6*) cylindrique creux ou en forme de bobine, ainsi que le déplacer axialement en va-et-vient par rapport à l'inducteur (6, 6*) mobile axialement.

13. Installation de fabrication selon la revendication 12, **caractérisée en ce qu'**un module de durcissement (44) est présent, dans lequel sont disposés des stators (2) ou induits pour un durcissement complet, et que le premier automate de manipulation (50) est réalisé de sorte que celui-ci peut également remplir et vider le module de durcissement (44).

14. Installation de fabrication selon la revendication 13, **caractérisée en ce que** le module de durcissement (44) présente un inducteur (70) propre, au moyen duquel des stators (2) ou induits posés dans le module de durcissement (44) peuvent être chauffés pour le durcissement complet.

15. Installation de fabrication selon la revendication 13 ou 14, **caractérisée en ce que** le module de durcissement (44) présente pour chaque stator (2) ou induit à poser à cet endroit une sortie rotative (71) séparée, au moyen de laquelle le stator (2) ou l'induit respectif peut être amené en rotation autour de l'axe longitudinal de celui-ci pendant son durcissement.

16. Installation de fabrication selon l'une quelconque des revendications 13 à 15, **caractérisé en ce qu'**un module de stockage (49) est présent, dans lequel le contenant (10) pour la résine synthétique et le contenant (11) pour le durcisseur peuvent être stockés, et que ce module de stockage (49) peut être rempli et vidé par le premier automate de manipulation (50) ou par un deuxième automate de manipulation (54).
